# EUROPÄISCHE PATENTANMELDUNG

(11) **EP 1 052 592 A1**
(43) Veröffentlichungstag der Anmeldung: **15.11.2000**
(21) Anmeldenummer: 99109181.0
(22) Anmeldetag: 10.05.1999
(51) Int. Cl.: G06K 9/00

(54) **Lebenderkennung für einen Fingerabdruck bei einer Authentifikation**

(71) Anmelder: SIEMENS AKTIENGESELLSCHAFT, 80333 München (DE)
(72) Erfinder: Schoeffel, Roland, 85301 Schweitenkirchen (DE); Bromba, Manfred, 81359 München (DE)

(57) **Zusammenfassung**

Die Erfindung betrifft ein Verfahren zur Lebenderkennung, insbesondere bei der Verwendung eines biometrischen Musters zur Authentifizierung, bei dem auf den menschlichen Körper ein mechanischer und/oder elektrischer Reiz ausgeübt wird, und bei dem eine Reaktion des Körpers darauf detektiert und ausgewertet wird.

## Beschreibung

Die Erfindung betrifft ein Verfahren zur Lebenderkennung eines menschlichen Körpers beziehungsweise eines menschlichen Körperteiles sowie ein Detektionssystem hierfür.

Bei der Authentifikation werden in zunehmendem Maße biometrische Muster und insbesondere Fingerabdrücke verwendet. Die Authentifikation dient hierbei als Zutrittskontrolle beispielsweise für elektronische Geräte der Kommunikations- und der Informationstechnik. Darunter sind unter Anderem Mobiltelefone, Rechnersysteme und Notebooks zu verstehen. Auch im heimischen Bereich kann die Nutzung des Telefons oder die Abrechnung von Telefongebühren oder die Benutzung des Fernsehers beziehungsweise Videorecorders kontrolliert werden. Weiter ist die Authentifikation eine Voraussetzung für die Abwicklung von Geldgeschäften, beispielsweise an einem sogenannten Online-Terminal.

Durch die Erfassung charakteristischer personenbezogener Merkmale kann die Nutzung von Systemen mit großer Sicherheit nur für die berechtigten Benutzer reserviert sein. Ein mechanisches Versperren von Geräten oder Räumen ist dann nicht mehr notwendig. Geeignete personenbezogene Merkmale sind beispielsweise das Muster der Blutbahnen der Netzhaut, die Struktur der Iris, die Länge und Form der Finger, das Gesicht, die Stimme oder der Fingerabdruck. Momentan ist am einfachsten eine Authentifikation unter Verwendung eines oder mehrerer Fingerabdrücke durchführbar.

Der Erfindung liegt die Aufgabe zugrunde, die Sicherheit bei der Authentifizierung unter Verwendung eines biometrischen Musters zu erhöhen.

Diese Aufgabe wird erfindungsgemäß für ein Verfahren durch die im Patentanspruch 1 und für ein Detektionssystem durch die im Patentanspruch 2 angegebenen Merkmale gelöst.

Durch die Lebenderkennung, beispielsweise bei einem Fingerabdruck, kann eine mißbräuchlich durchgeführte Authentifikation verhindert werden.

Im folgenden wird die Erfindung anhand eines Ausführungsbeispieles beschrieben.

Es sind verschiedenen Verfahren bekannt, die eine Lebenderkennung ermöglichen. Es gehört hierzu die Bestimmung der Hämoglobinverhältnisse über optische Verfahren, eine Temperaturmessung, eine Pulsmessung oder eine Hautwiderstandsmessung. Diese Methoden sind meist teuer, zeitaufwendig oder haben einen hohen Stromverbrauch.

Der Erfindung liegt die Idee zugrunde, den menschlichen Körper durch einen beispielsweise auf einem Sensor liegenden Finger durch schwache mechanische und/oder elektrische oder sonstige Impulse zu reizen, und dann die Reaktion auszuwerten. Die Reaktion besteht grundsätzlich darin, daß der Anwender beim Verspüren des Impulses weiß, daß er den Finger zurückziehen soll. Diese Reaktion kann der Sensor sofort feststellen.

Im einzelnen kann der Sensor einen Stift aufweisen, der kurzfristig gegen den Finger drückt. Ausgewertet wird dann beispielsweise die Reaktionszeit, innerhalb der der Finger bewegt wird. Der mechanische Reiz kann auch eine Vibration sein die wiederum zu einer Reaktion des Fingers führt. Diese Reaktion kann eine Bewegung des Fingers oder ein elektrisches Signal sein, das vom menschlichen Körper, beispielsweise über die Hautoberfläche abgegeben wird.

Das erfindungsgemäße Detektionssystem weist beispielsweise eine Sensorfläche auf, über die auf den Finger ein elektrischer Reiz, beispielsweise ein geringer Stromstoß ausgeübt wird. Der menschliche Körper reagiert auch auf diesen Reiz mit einem elektrischen Signal, das von der Hautoberfläche abgenommen werden kann. Hierzu kann die Sensorfläche beispielsweise einen elektrischen Kontakt aufweisen, der mit der Hautoberfläche des Fingers in Verbindung steht. Die Detektion des elektrischen Signales kann auch kapazitiv erfolgen.

Zur Ausübung eines mechanischen Reizes kann beispielsweise in der Mitte der Sensorfläche ein Loch vorgesehen sein, durch das hindurch ein Stift oder eine Spitze gegen den Finger gedrückt werden.

In den vorstehenden Ausführungen wird immer der Finger als Kontaktorgan zum menschlichen Körper verwendet. Es ist auch denkbar, die Handfläche oder einen Teil des Armes hierzu zu verwenden.

Durch diese Methode ist sichergestellt, daß der Finger nicht lokal reagiert, sondern daß die Reaktion immer über den Umweg über das zentrale Nervensystem erfolgt. Hierdurch ist die Lebenderkennung gewährleistet.

Das Detektionssystem kann bei einer Weiterführung der Erfindung einen sogenannten Fingertip-Sensor zur Authentifizierung aufweisen. Hierbei ist bei einer vorteilhaften Ausgestaltung der Erfindung der Sensor zur Ausübung beziehungsweise Auswertung der Reize in den Fingertip-Sensor integriert.

## Patentansprüche

1. Verfahren zur Lebenderkennung, insbesondere bei der Verwendung eines biometrischen Musters zur Authentifizierung,
bei dem auf den menschlichen Körper ein mechanischer und/oder elektrischer Reiz ausgeübt wird, und
bei dem eine Reaktion des Körpers darauf detektiert und ausgewertet wird.

2. Verfahren nach Anspruch 1,
bei dem ein elektrisches Signal von der Hautoberfläche als Reaktion darauf detektiert und ausgewertet wird.

3. Verfahren nach Anspruch 1,
bei dem eine Bewegung als Reaktion darauf detektiert und eine Reaktionszeit ausgewertet wird.

4. Detektionssystem für den menschlichen Körper,
mit Mitteln zur Abgabe mechanischer und/oder elektrischer Reize, und
mit Mitteln zur Detektion und Auswertung einer Reaktion des Körpers.

5. Detektionssystem nach Anspruch 4,
bei dem die Mittel zur Detektion und Auswertung Mittel zur Aufnahme von elektrischen Signalen von der Hautoberfläche aufweisen.

6. Detektionssystem nach Anspruch 5,
bei dem die Mittel zur Aufnahme berührungslos, insbesondere kapazitiv, ausgebildet sind.

7. Detektionssystem nach Anspruch 4,
bei dem die Mittel zur Detektion und Auswertung Mittel zur Detektion einer Bewegung des Körpers und zur Auswertung einer Reaktionszeit aufweisen.

8. Detektionssystem nach einem der Ansprüche 4 bis 7,
mit integrierten Mitteln zur Authentifizierung unter Verwendung eines biometrischen Musters.

9. Detektionssystem nach Anspruch 8,
bei dem die Mittel zur Authentifizierung einen Fingertip-Sensor aufweisen.
